# EUROPEAN PATENT APPLICATION

(11) **EP 4 246 637 A1**
(43) Date of publication of application: **20.09.2023**
(21) Application number: 23162301.8
(22) Date of filing: 16.03.2023
(51) Int. Cl.: H01M 10/04, H01M 10/052, H01M 10/0562, H01M 10/0565, H01M 10/0585, H01M 50/103, H01M 50/109, H01M 50/186, H01M 50/193, H01M 50/198, H01M 50/209, H01M 50/216, H01M 50/545, H01M 4/86

(54) **ALL SOLID SECONDARY BATTERY AND MODULE OF THE SAME**

(30) Priority: 17.03.2022 KR 20220033461
(71) Applicant: Samsung SDI Co., Ltd., Yongin-si, Gyeonggi-do 17084 (KR)
(72) Inventor: Yi, Sangil, 17084 Yongin-si, Gyeonggi-do (KR); Kim, Seongseop, 17084 Yongin-si, Gyeonggi-do (KR); Hong, Hyeoksoo, 17084 Yongin-si, Gyeonggi-do (KR); Kim, Dongwoo, 17084 Yongin-si, Gyeonggi-do (KR)
(74) Representative: Gulde & Partner

(57) **Abstract**

An all solid secondary battery includes an electrode assembly (100), and a case (10) accommodating the electrode assembly (100), wherein the electrode assembly (100) includes a unit cell portion (110), an anode current collector portion (120), and a cathode current collector portion (130), the case (10) includes first and second cases (11, 12) insulated from each other, the anode current collector portion (120) contacts the first case (11), and the cathode current collector portion contacts the second case (12).

## Description

### BACKGROUND

### 1. Field

One or more embodiments relate to a secondary battery and a module thereof.

### 2. Description of the Related Art

Recently, the development of batteries having high energy density and safety has been actively carried out in response to industrial demands. For example, lithium-ion batteries have been put to practical use not only in the field of information-related devices and communication devices, but also in the field of automobiles. In the field of automobiles, safety is related to life and thus is particularly significant.

Lithium-ion batteries currently in the market use a liquid electrolyte and may ignite when exposed to water in the air, and thus, may require improved stability. As use of electric vehicles increases, the importance of improved stability increases.

Accordingly, research into all solid secondary batteries using solid electrolytes made of inorganic materials has recently been actively conducted to improve safety. All solid secondary batteries have attracted attention as next-generation secondary batteries in terms of stability, high energy density, high power, long life, simplified manufacturing processes, enlargement, compactness, low cost of batteries, and the like.

### SUMMARY

According to one or more embodiments, an all solid secondary battery includes an electrode assembly, and a case accommodating the electrode assembly, wherein the electrode assembly includes a unit cell portion, an anode current collector portion, and a cathode current collector portion, the case includes first and second cases insulated from each other, the anode current collector portion contacts the first case, and the cathode current collector portion contacts the second case.

The all solid secondary battery may further include an insulator arranged between the first and second cases.

The insulator may include an elastic material. The insulator may be deformed according to changes in volumes of the electrode assembly and the case.

The anode current collector portion may include an anode current collector, an anode layer, and an electrolyte film that are sequentially stacked and arranged.

The anode current collector of the anode current collector portion may contact the first case.

The cathode current collector portion may include a cathode current collector, a cathode layer, and an electrolyte film that are sequentially stacked and arranged.

The cathode current collector of the cathode current collector portion may contact the second case.

At least one unit cell portion may be arranged between the anode current collector portion and the cathode current collector portion.

The unit cell portion may include a cathode layer and an anode layer respectively arranged on both sides of a bipolar plate, and electrolyte films respectively arranged on an outer side of the anode layer and an outer side of the cathode layer.

According to one or more embodiments, an all solid secondary battery module includes a plurality of secondary batteries, wherein the plurality of secondary batteries are arranged to contact each other, and, from among the plurality of secondary batteries, a first case of one secondary battery is arranged to contact a second case of another secondary battery.

An insulating portion may be arranged on one side of a first case and the other side of a second case of the one secondary battery.

According to one or more embodiments, an all solid secondary battery module includes a plurality of secondary batteries, wherein the plurality of secondary batteries are arranged to contact each other, and, from among the plurality of secondary batteries, a first case of one secondary battery is arranged to contact a first case of another secondary battery.

An insulating portion may be arranged between a first case of the one secondary battery and a second case of the other secondary battery.

### BRIEF DESCRIPTION OF THE DRAWINGS

Features will become apparent to those of skill in the art by describing in detail exemplary embodiments with reference to the attached drawings, in which:
FIG. 1 is a cross-sectional view illustrating an electrode assembly according to an embodiment:
FIG. 2 is a cross-sectional view illustrating an electrode assembly and a case structure accommodating the electrode assembly, according to an embodiment:
FIGS. 3A and 3B are views illustrating a state in which secondary battery cells are arranged in series to form a secondary battery module, according to embodiments; and
FIG. 4 is a view illustrating a state in which secondary battery cells are arranged in parallel to form a secondary battery module, according to some embodiments.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

As used herein, the term "and/or" includes any and all combinations of one or more of the associated listed items. Expressions such as "at least one of," when preceding a list of elements, modify the entire list of elements and do not modify the individual elements of the list.

While the disclosure is capable of various modifications and may have various embodiments, particular embodiments thereof are shown by way of example in the drawings and will herein be described in detail. It should be understood, however, that there is no intent to limit the disclosure to particular embodiments, but on the contrary, the disclosure is to cover all modifications, equivalents, and alternatives falling within the scope thereof.

As used herein, although the terms, 'first', 'second', etc. are only used to distinguish one element from another, these elements should not be limited by these terms. Further, as used herein, the singular forms are intended to include the plural forms as well, unless the context clearly indicates otherwise.

It will be further understood that the terms "comprise," "comprising," "include," "including," "have," "having," and the like, when used herein, specify the presence of stated features and/or elements, but do not preclude the presence or addition of one or more other features and/or elements.

As used herein, an x-axis, a y-axis, and a z-axis are not limited to three axes on an orthogonal coordinate system, and may be interpreted as a wide meaning including the same. For example, the x-axis, y-axis, and z-axis may be orthogonal to one another, but may also refer to different directions that are not orthogonal to one another.

When some embodiments are otherwise implementable, a particular process sequence may be performed differently from a sequence described. For example, two processes described in succession may be performed substantially simultaneously, or may be performed in an order opposite to an order described.

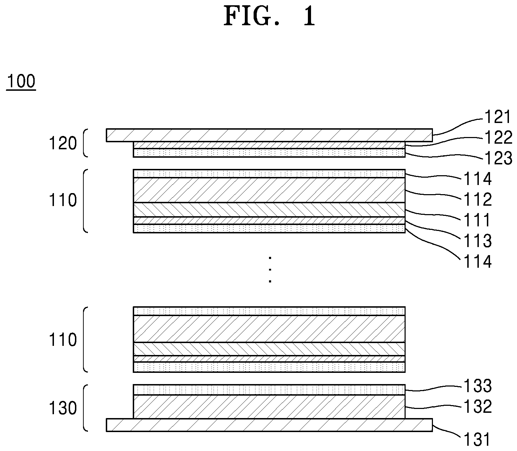

Hereinafter, an electrode assembly of an all solid secondary battery according to an embodiment will be described with reference to FIG. 1. FIG. 1 is a cross-sectional view illustrating an electrode assembly according to an embodiment.

Referring to FIG. 1, an electrode assembly 100 according to an embodiment may include a unit cell portion 110, an anode current collector portion 120, and a cathode current collector portion 130. According to the present embodiment, the electrode assembly 100 may be formed by stacking three types of unit cells, such as the unit cell portion 110, the anode current collector portion 120, and the cathode current collector portion 130. Here, the anode current collector portion 120 may be arranged at an outermost stack portion on one side of the electrode assembly 100, and the cathode current collector portion 130 may be arranged at an outermost stack portion on the other side of the electrode assembly 100. At least one unit cell portion 110 may be stacked and arranged between the anode current collector portion 120 and the cathode current collector portion 130.

The unit cell portion 110 may be formed to have a structure in which a cathode layer 112 and an anode layer 113 are respectively arranged on both sides of a bipolar plate 111, e.g., the cathode layer 112 and the anode layer 113 may be respectively arranged on opposite sides of the bipolar plate 111. Further, electrolyte films 114 are respectively arranged on an outer side of the anode layer 113 and an outer side of the cathode layer 112, e.g., each of the cathode layer 112 and the anode layer 113 may be arranged directly between the bipolar plate 111 and a corresponding one of the electrolyte films 114. For example, the bipolar plate 111, the cathode layer 112, the anode layer 113, and two electrolyte films 114 may form a, e.g., single, layered structure, and may be stacked on one another.

The bipolar plate 111 may be arranged between the cathode layer 112 and the anode layer 113, and may be formed as a conductive plate connecting an anode to a cathode. The bipolar plate 111 according to the present embodiment may include Cu-Al. The cathode layer 112 may be arranged on one side of the bipolar plate 111, and the anode layer 113 may be arranged on the other, e.g., opposite, side of the bipolar plate 111. The anode layer 113 according to the present embodiment may include an Ag-C layer.

The electrolyte films 114 may be respectively disposed on an outer layer of the cathode layer 112 and an outer layer of the anode layer 113 on the basis of the bipolar plate 111. For example, referring to FIG. 1, one electrolyte film 114 may be respectively disposed on an outer surface of each of the cathode layer 112 and the anode layer 113, with the bipolar plate 111 directly contacting an inner surface of each of the cathode layer 112 and the anode layer 113. The electrolyte films 114 may be formed by coating outer portions, e.g., surfaces, of the cathode layer 112 and the anode layer 113, respectively. Therefore, the electrolyte films 114 may be respectively coated on outer portions, e.g., surfaces, of both sides of each unit cell portion 110. As such, when a plurality of unit cell portions 110 are stacked and arranged, the unit cell portions 110 may be electrically connected to each other while the electrolyte films 114 of the respective unit cell portions 110 contact each other, e.g., two electrolyte films 114 may directly contact each other and be positioned between two adjacent unit cell portions 110. As the plurality of unit cell portions 110 are stacked and arranged while contacting each other, the unit cell portions 110 are connected to each other in series, thereby increasing a voltage of a secondary battery including the electrode assembly 100.

The anode current collector portion 120 may be arranged at an outermost stack portion on one side of the plurality of unit cell portions 110 that are stacked in series with each other. The anode current collector portion 120 may include an anode current collector 121, an anode layer 122, and an electrolyte film 123 that are sequentially stacked and arranged.

Here, the electrolyte film 123 may be arranged to, e.g., directly, contact the electrolyte film 114 of, e.g., a closest one of the plurality of unit cell portions 110. Accordingly, the plurality of unit cell portions 110 and the anode current collector portion 120 may be electrically connected to each other through the electrolyte film 123. The anode current collector 121 of the anode current collector portion 120 may be arranged at an outermost portion of the electrode assembly 100. As described below, the anode current collector 121 arranged at the outermost portion of the electrode assembly 100 may be arranged to, e.g., directly, contact one case, such that contacting the one case may form an anode.

The cathode current collector portion 130 may be arranged at the outermost stack portion on the other side of the plurality of unit cell portions 110 that are stacked in series with each other. The cathode current collector portion 130 may include a cathode current collector 131, a cathode layer 132, and an electrolyte film 133 that are sequentially stacked and arranged.

Here, the electrolyte film 133 may be arranged to, e.g., directly contact the electrolyte film 114 of, e.g., a closest one of the plurality of unit cell portions 110. Accordingly, the plurality of unit cell portions 110 and the cathode current collector portion 130 may be electrically connected to each other through the electrolyte film 133. The cathode current collector 131 of the cathode current collector portion 130 may be arranged at the outermost portion of the electrode assembly 100. As described below, the cathode current collector 131 arranged at the outermost portion of the electrode assembly 100 may be arranged to, e.g., directly, contact another case, such that contacting the other case may form a cathode.

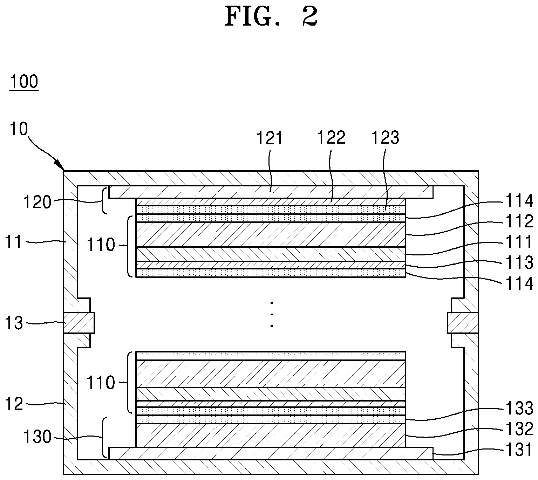

Hereinafter, an all solid secondary battery according to an embodiment will be described with reference to FIG. 2. FIG. 2 is a cross-sectional view illustrating the electrode assembly 100 in a case structure accommodating the electrode assembly 100, according to an embodiment.

Referring to FIG. 2, an all solid secondary battery according to an embodiment may include the electrode assembly 100 and a case 10 accommodating the electrode assembly 100. The electrode assembly 100 may include the unit cell portion 110, the anode current collector portion 120, and the cathode current collector portion 130 described previously with reference to FIG .1.

As illustrated in FIG. 2, the case 10 may include first and second cases 11 and 12 insulated from each other. For example, as illustrated in FIG. 2, each of the first and second cases 11 and 12 may include a main side, lateral sides extending from the main side, and an open side opposite the main side, such that the open sides of the first and second cases 11 and 12 face each other, and the lateral sides are aligned with each other and are insulated from each other. For example, as illustrated in FIG. 2, at least a first unit cell portion 110 may be accommodated in the first case 11, at least a second unit cell portion 110 may be accommodated in the second case 12 while being electrically connected to the first unit cell portion 110. The anode current collector portion 120 (e.g., of the first unit cell portion 110) contacts the first case 11, and the cathode current collector portion 130 (e.g., of the second unit cell portion 110) contacts the second case 12. However, embodiments are not limited to the above configuration, e.g., a single unit cell portion 110 may be accommodated in the case 10 or one or more unit cell portions 110 may be additionally accommodated in the case 10 between the first and second unit cell portions 110.

As illustrated in FIG. 2, an insulator 13 may be arranged between the first and second cases 11 and 12, e.g., between lateral sides of the first and second cases 11 and 12. The insulator 13 may block an electrical connection between the first case 11 and the second case 12. Accordingly, the first case 11, e.g., directly, contacting the anode current collector portion 120, i.e., the anode current collector 121 of the anode current collector portion 120, may have an anode formed, and the second case 12, e.g., directly, contacting the cathode current collector portion 130, i.e., a cathode current collector 131 of the cathode current collector portion 130, may have a cathode formed.

As described above, an electrode plate structure of the electrode assembly 100 may be formed such that the anode current collector 121 and the cathode current collector 131 are arranged only at outermost portions of the electrode assembly 100, thereby allowing the anode current collector 121 and the cathode current collector 131 to respectively contact the first and second cases 11 and 12 formed as prismatic cell bodies to allow the entire prismatic cell formed as the case 10 to form an electrode structure.

According to the present embodiment, the insulator 13 may be formed of an insulating elastic material, e.g., as a gasket, having an insulation function. The insulator 13 may seal the electrode assembly 100 together with the first and second cases 11 and 12 to secure charging performance, and simultaneously, may block an electrical connection between the first and second cases 11 and 12 to allow each of the first and second cases 11 and 12 to have polarity. For example, the insulator 13 may be a single, continuous gasket along an entire interface between the first and second cases 11 and 12. The gasket may be formed of rubber.

The insulator 13 according to the present embodiment may be deformed, e.g., deformable, in accordance to changes in the volumes of the electrode assembly 100 and the case 10. In other words, since the insulator 13 is formed of an elastic material, e.g., a gasket, the insulator 13 may be deformed in response to a change in volume of the electrode assembly 100 occurring during charging and discharging, e.g., may adjust its shape and deform to accommodate the increased volume during charging and discharging, thereby preventing or substantially minimizing damage and deformation of the case 10 coupled to the electrode assembly 100. Accordingly, the durability of the secondary battery according to example embodiments may be improved by minimizing the deformation and damage of the case 10 despite a change in volume of the electrode assembly 100, e.g., despite swelling of the electrode assembly 100.

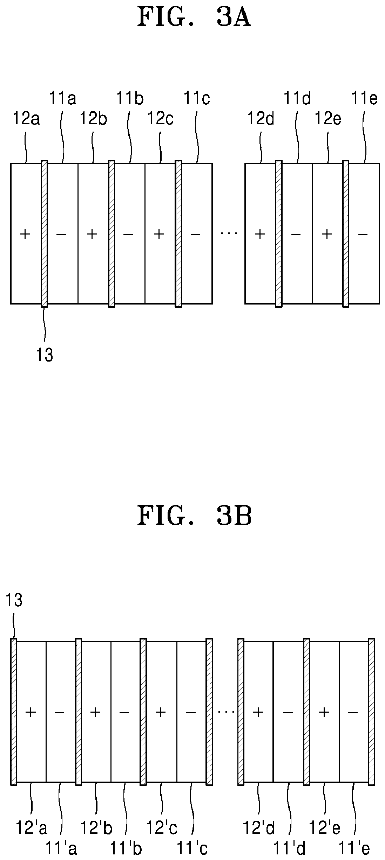

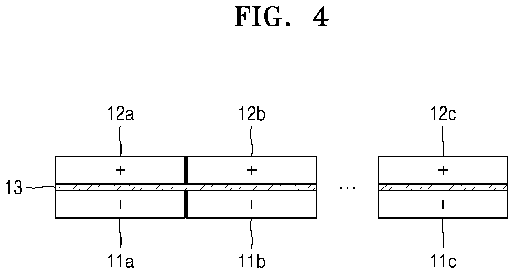

Hereinafter, an all solid secondary battery module according to an embodiment will be described with reference to FIGS. 3A, 3B, and 4. For the elements that are not illustrated in FIGS. 3A, 3B, and 4, reference may be made to FIGS. 1 and 2. FIGS. 3A and 3B are views illustrating a state in which secondary battery cells are arranged in series to form a secondary battery module, according to embodiments.

Referring to FIGS. 3A and 3B, a secondary battery module according to an embodiment may include a plurality of secondary batteries that are arranged to contact each other, and, from among the plurality of secondary batteries, the first case 11 of one secondary battery may be arranged to contact the second case 12 of another secondary battery. For example, the first and second cases 11 and 12 may be referred to as anode and cathode cases, and the anode and cathode cases may be arranged alternately with each other to define a plurality of secondary batteries in the secondary module.

Here, an insulating portion, e.g., the insulator 13, may be arranged on one side of the first case 11 and the other side of the second case 12 of the one secondary battery. Referring to FIGS.3A and 3B, the insulator 13 may be alternately arranged to block contact of one of two portions at which two different polarities of two different secondary batteries contact each other.

FIG. 3A is a view illustrating one side portion of a plurality of secondary batteries that are connected to one another in series. FIG. 3B is a view illustrating the other side portion of the plurality of secondary batteries that are connected to one another in series.

Referring to FIGS. 3A and 3B, each of the secondary batteries may be arranged in series, and each of the secondary batteries may be formed such that polarities of cases of one side portion and the other side portion are different from each other. For example, as illustrated in FIG. 3A, a cathode case 12a and an anode case 11a of a first secondary battery, a cathode case 12b and an anode case 11b of a second secondary battery, a cathode case 12c and an anode case 11c of a third secondary battery, a cathode case 12d and an anode case 11d of a fourth secondary battery, and a cathode case 12e and an anode case 11e of a fifth secondary battery may be sequentially arranged in series. In other words, a cathode case 12a shown in FIG.3A and an anode case 11 a' shown in FIG.3B of a first secondary battery, an anode case 11a shown in FIG.3A and a cathode case 12a' shown in FIG.3B of a second secondary battery, a cathode case 12b shown in FIG.3A and an anode case 11b' shown in FIG.3B of a third secondary battery, an anode case 11b shown in FIG.3A and a cathode case 12b' shown in FIG.3B of a fourth secondary battery, a cathode case 12c shown in FIG.3A and an anode case 11c' shown in FIG.3B of a fifth secondary battery, an anode case 11c shown in FIG.3A and a cathode case 12c' shown in FIG.3B of a sixth secondary battery, and the like may be sequentially arranged in series .

Here, as illustrated in FIG. 3A, the cathode cases 12a, 12b, 12c, etc. may be sequentially disposed on one side portion of each of the secondary batteries (e.g., on each side of a corresponding case 10), and the anode cases 11a, 11b, etc. may have different polarities and may be disposed on another side portion of each of the secondary batteries. For example, as illustrated in FIG. 3A, anode and cathode cases within a same case 10 may be insulated from each other by the insulator 13, while anode and cathode cases from adjacent cases 10 may have different polarities, may not be insulated from each other by the insulator 13, and may contact each other to connect the secondary batteries to each other.

As described above, when portions of respective secondary batteries having different polarities contact each other and a plurality of secondary batteries contacting each other are connected to each other to generate a higher voltage or charging capacity, secondary battery modules connected in series may be formed only by direct contact between, e.g., cases of, respective secondary batteries without an additional electrical connection portion between the secondary batteries, e.g., without using a bus bar.

FIG. 4 is a view illustrating a state in which secondary battery cells are arranged in parallel to form a secondary battery module, according to some embodiments.

Referring to FIG. 4, in a secondary battery module according to some embodiments, from among a plurality of secondary batteries, a first case 11a of a first secondary battery may be arranged in parallel to contact a first case 11b of a second secondary battery. Here, the insulator 13 may be arranged between the first case 11a of the first secondary battery and the second case 12a of the first secondary battery and also between the first case 11b of the second secondary battery and the second case 12b of the second secondary battery.

As described above, not only a serial connection between secondary batteries but also a parallel connection between the secondary batteries may be made. In more detail, when portions of secondary batteries having the same polarities contact each other and a plurality of secondary batteries contacting each other are connected to each other to generate a higher voltage or charging capacity, secondary battery modules connected in parallel may be formed only by direct contact between the secondary batteries without an additional electrical connection portion between secondary batteries, e.g., without using a bus bar.

In the present disclosure, connections or connection portions of lines between elements shown in the drawings illustratively show functional connections and/or physical or circuit connections, and may be replaced in an actual apparatus or may be represented by various additional functional connections, physical connections, or circuit connections.

The embodiments are not necessarily limited according to the described order of the operations. The use of all examples or example terms (e.g., etc.) in the embodiments are simply for describing the embodiments in detail, and unless limited by claims, the scope of the embodiments is not limited by the examples or example terms.

By way of summation and review, one or more embodiments include a novel all solid secondary battery and a module thereof. That is, an all solid secondary battery and a module thereof according to an embodiment allows an anode current collector and a cathode current collector of an electrode assembly to directly contact a case, thereby forming a natural electrode structure through the case. Therefore, an all solid secondary battery module may be formed simply by arranging cases directly contacting an anode current collector and a cathode current collector to contact each other, e.g., so a plurality of cases directly contact each other via sidewalls to form electrical connections. Accordingly, an additional electrode connection component, e.g., a bus bar, is not needed, and thus, an all solid secondary battery may be simplified and compact.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An all solid secondary battery, comprising:
an electrode assembly (100), the electrode assembly (100) including at least one unit cell portion (110), an anode current collector portion (120), and a cathode current collector portion (130); and
a case (10) accommodating the electrode assembly (100), the case including a first case (11) and a second case (12) insulated from each other, the anode current collector portion (120) contacting the first case (11), and the cathode current collector portion (130) contacting the second case (12).

2. The all solid secondary battery as claimed in claim 1, further comprising an insulator (13) between the first case (11) and the second case (12).

3. The all solid secondary battery as claimed in claim 2, wherein the insulator (13) includes a gasket which is made of an elastic material, the insulator being deformable in accordance with changes in volumes of the electrode assembly (100) and the case (10) .

4. The all solid secondary battery as claimed in one of the preceding claims, wherein the anode current collector portion (120) includes an anode current collector (121), an anode layer (122), and an electrolyte film (123) that are sequentially stacked.

5. The all solid secondary battery as claimed in claim 4, wherein the anode current collector (121) of the anode current collector portion (120) is in contact with the first case (11).

6. The all solid secondary battery as claimed in one of the preceding claims, wherein the cathode current collector portion (130) includes a cathode current collector (131), a cathode layer (132), and an electrolyte film (133) that are sequentially stacked.

7. The all solid secondary battery as claimed in claim 6, wherein the cathode current collector (131) of the cathode current collector portion (130) is in contact with the second case (12).

8. The all solid secondary battery as claimed in one of the preceding claims, wherein the at least one unit cell portion (110) is arranged between the anode current collector portion (120) and the cathode current collector portion (130).

9. The all solid secondary battery as claimed in one of the preceding claims, wherein the at least one unit cell portion (110) includes:
a cathode layer (112) and an anode layer (113) respectively arranged on opposite sides of a bipolar plate (111), and
electrolyte films (114) respectively arranged on an outer side of the anode layer (113) and an outer side of the cathode layer (112).

10. An all solid secondary battery module, comprising:
a plurality of secondary batteries according to one of the preceding claims, the secondary batteries being arranged to contact each other,
wherein a first case (11a) of a first of the plurality of secondary batteries is arranged to contact one of a first case (11b) and a second case (12b) of a second of the plurality of secondary batteries.

11. The all solid secondary battery module of claim 10, wherein the first case (11a) of the first of the plurality of secondary batteries is arranged to contact the second case (12b) of the second of the plurality of secondary batteries, the first case (11a) and the second case (12b) having different polarities.

12. The all solid secondary battery module as claimed in claim 11, wherein an insulator (13) is arranged on one side of the first case (11a) and another side of the second case (12b).

13. The all solid secondary battery module according to claim 10,
wherein the first case (11a) of the first of the plurality of secondary batteries is arranged to contact the first case (11b) of the second of the plurality of secondary batteries, the first case (11a) of the first of the plurality of secondary batteries and the first case (11b) of the second of the plurality of secondary batteries having same polarities.

14. The all solid secondary battery module as claimed in claim 13, wherein an insulator (13) is arranged between the first case (11a) of the first of the plurality of secondary batteries and a second case (12a) of the first of the plurality of secondary batteries.
